# EUROPEAN PATENT APPLICATION

(11) **EP 2 961 114 A1**
(43) Date of publication of application: **30.12.2015**
(21) Application number: 14173706.4
(22) Date of filing: 24.06.2014
(51) Int. Cl.: H04L 12/715, H04L 29/06

(54) **Method and device for establishing a data connection with obscured routing**

(71) Applicant: Nokia Solutions and Networks GmbH & Co. KG, 81541 Munich (DE)
(72) Inventor: Hoffmann, Klaus, 80995 Munich (DE)

(57) **Abstract**

It is described a method of establishing at least one data connection in a network, wherein a requesting entity (VNP1, VNP2, VNO) requests the at least one data connection via a plurality of paths (P1..P9) through connected subnetworks (PIP1..PIP4) in said network. At least a part of the routing information, which identifies the subnetworks (PIP1..PIP4), via which the at least one data connection shall be switched, is sent from the requesting entity (VNP1, VNP2, VNO) to the subnetworks (PIP1..PIP4) in encrypted form. Alternatively or in addition also at least some addresses (ID(N11)..ID(N44)) of calculated/allocated subnetwork nodes (N11..N44) of the at least one data connection are sent from the subnetworks (PIP1..PIP4) to the requesting entity (VNP1, VNP2, VNO) in encrypted form.

## Description

### Field of invention

The present invention relates to a method of establishing at least one data connection in a network, wherein a requesting entity requests the at least one data connection via a plurality of paths through connected subnetworks in said network. Moreover the invention relates to a requesting entity and a subnetwork / subnetwork controller designed for executing said method.

### Art Background

A method, a requesting entity and a subnetwork / subnetwork controller of the kind above are known in prior art in principle. Quite often (data) connections are switched over a number of adjacent networks, in particular if the end points of the data connection are far apart. Moreover, there is a number of different possibilities to switch such a connection. Different providers may switch different connections between the same end points offering different qualities of service for different prices. Based on contracts, which may cover commercial and/or technical interrelations, a provider can prefer particular subnetworks or avoid them. These contractual relations are normally kept confidential. However, routing information and/or address information of the connection travels through different subnetworks during allocation of the connection and can be evaluated there in principle, why said confidentiality is undermined.

Accordingly, there may be a need for an improved method of establishing a data connection in a network, an improved requesting entity and an improved subnetwork / subnetwork controller. In particular, the contractual relations between the requesting entity and the subnetworks shall be obscured.

### Summary of the Invention

This need may be met by the subject matter according to the independent claims. Advantageous embodiments of the present invention are described by the dependent claims.

According to a first aspect of the invention there is provided a method as disclosed in the opening paragraph, wherein
at least a part of the routing information, which identifies the subnetworks, via which the at least one data connection shall be switched, and/or at least some addresses of calculated/allocated subnetwork nodes of the at least one data connection are transmitted between the requesting entity and the subnetworks in encrypted form.

In particular, according to a further aspect of the invention there is provided a method, wherein the requesting entity sends routing information, which identifies the subnetworks, via which the at least one data connection shall be switched, and which is at least partly encrypted.

In particular, according to yet another aspect of the invention there is provided a method, wherein addresses of calculated/allocated subnetwork nodes of at least some of the paths are sent from a subnetwork to the requesting entity via at least a part of the paths in encrypted form.

According to a further aspect of the invention there is provided a requesting entity as disclosed in the opening paragraph, comprising
- means for encrypting routing information, which identifies the subnetworks, via which at least one data connection shall be switched, and/or
- means for decrypting at least some addresses of calculated/allocated subnetwork nodes of the at least one data connection.

According to a further aspect of the invention there is provided a subnetwork / subnetwork controller as disclosed in the opening paragraph, comprising
- means for decrypting routing information, which identifies the subnetworks, via which at least one data connection shall be switched, and/or
- means for encrypting at least some addresses of calculated/allocated subnetwork nodes of the at least one data connection.

Based on the measures disclosed above, the contractual relations between the requesting entity and the subnetworks are kept confidential respectively are obscured. Routing information and/or address information of the connection travelling through different subnetworks cannot be evaluated there.

It should be noted at this point that "data connection" has a general meaning in the context of the invention. Hence "data" may be audio data, text data, video data, picture data and/or machine data (e.g. program code, parameters, etc.) for use by computers.

According to a further aspect of the invention, the disclosed method may be used for computation simple data connections between two parties (point to point connection, P2P for short), path trees between a single party and a plurality of parties (point to multipoint connection, P2MP for short) and/or overlay networks between a plurality of parties (multipoint to multipoint connection, MP2MP for short). A path tree and an overlay network can also be seen as a crowd of single paths or connections. In case of a path tree all paths start (respectively end) at one point, in case of an overlay network they crisscross.

An "overlay network" or virtual network generally is a network which is built on the top of another network. Nodes in the overlay can be considered as being connected by virtual or logical links respectively paths. Each path may correspond to a number of physical links in the underlying network. The underlying physical network itself consists of connected subnetworks, which in particular are operated by different operators or providers.

It should be noted that the term "path computation element" does not limit the computation entity to the computation of a path. A "path computation element" may also calculate trees and overlay networks.

It should also be noted that the invention is not limited to a single data connection, a single tree or a single overlay network to be computed. By contrast, also a plurality of data connections, trees and/or overlay networks may be computed by a path computation element.

Furthermore, it should be noted that the requesting entity is not necessarily part of the requested data connection. The requesting entity may also request the data connection on behalf of the communication partners or another third party.

According to a further embodiment of the invention, a method of establishing at least one data connection in a network, in which the requesting entity requests the at least one data connection via the plurality of paths through connected subnetworks in said network, comprises the steps of a1) the requesting entity sending routing information identifying the subnetworks, via which the at least one data connection shall be switched, to a receiving subnetwork controller, wherein identifiers of at least some subnetworks are encrypted,
b1) the receiving subnetwork controller allocating a path to a subsequent/neighbouring subnetwork through the receiving subnetwork, wherein an identifier of the subsequent/neighbouring subnetwork is extracted from the routing information in plain format or extracted in encrypted form and decrypted by means of a key associated with the receiving subnetwork,
c1) the receiving subnetwork controller passing the routing information, in particular the remaining routing information, to a subsequent/neighbouring subnetwork controller,
d1) recursively repeating steps b1) and c1) until the at least one requested data connection is calculated/allocated, wherein the subsequent/neighbouring subnetwork controller of step c1) becomes a receiving subnetwork controller in a following step b1).

Advantageously, because of recursively repeating a part of the method above, just a comparably small piece of software is needed to deploy the method steps. By the measures taken above, generally the chain of connected subnetworks providing the requesting connection may be obscured, thus keeping the (commercial) relations between the requesting entity and the subnetworks secret. If the identifier of a subsequent/neighbouring subnetwork is encrypted, just the receiving subnetwork can identify it. In other words, just the next neighbour is known to a subnetwork controller. However, complete encryption is not mandatory. Some relations may be visible, if obscuring a particular relation is not useful to the requesting entity or if a subnetwork simply does not support such a function.

According to a further embodiment of the invention, an identifier of a subsequent/neighbouring subnetwork is encrypted by means of public key of the receiving subnetwork and decrypted by means of an associated private key of said receiving subnetwork. Accordingly, by means of asymmetric ciphering, encryption can be done very easily as the requesting entity just has to gather (and store) the public keys of said subnetworks. For example, the PGP (Pretty Good Privacy) encryption method may be used for the concerns above. However, instead of asymmetric ciphering, symmetric ciphering can be used as well.

Advantageously, every pair of a private key and a public key is different. In this way, obscuring the relations between the requesting entity and the subnetworks is particularly effective.

Advantageously, the "Path Computation Element Protocol", the "Resource Reservation Protocol", the "Label Distribution Protocol" and/or the "Border Gateway Protocol" is used for communication between the requesting entity and the subnetworks. In particular, a "PcRequest" message of the "Path Computation Element Protocol", a "Path" message of the "Resource Reservation Protocol", a "Label request" message of the "Label Distribution Protocol" or a "Update" message of the "Border Gateway Protocol" may be used for sending the routing information in step a1). Accordingly, the invention may be implemented with just low effort as existing protocols are used respectively extended.

According to a further embodiment of the invention, some of the addresses are sent from a subnetwork directly to the requesting entity in plain form. As the addresses do not travel through "foreign" subnetworks, the technical effort for encrypting the same can be saved.

According to yet other embodiment of the invention, some of the addresses are also sent from a subnetwork directly to the requesting entity in encrypted form. In this way, the address information cannot be evaluated to find out the relations between the requesting entity and the subnetworks by any third party.

According to a further advantageous embodiment of the invention, a method of establishing at least one data connection, in which the requesting entity requests the at least one data connection via a plurality of paths through connected subnetworks in said network, comprises the steps of
a2) the requesting entity sending routing information identifying the subnetworks, via which the at least one data connection shall be switched, to a receiving subnetwork controller,
b2) the receiving subnetwork controller allocating subnetwork nodes and paths via said nodes to a subsequent/neighbouring subnetwork through the receiving subnetwork,
c2) the receiving subnetwork controller passing the routing information, in particular the remaining routing information, to a subsequent/neighbouring subnetwork controller,
d2) the receiving subnetwork controller sending addresses of calculated/allocated subnetwork nodes of the path in the receiving subnetwork and if applicable addresses of calculated/allocated subnetwork nodes of a further path in a further subnetwork of the at least one data connection
   - in plain or encrypted form directly to the requesting entity,
   - in encrypted form to the requesting entity via at least a part of the preceding path or
   - in encrypted form to a subsequent/neighbouring subnetwork controller,
e2) recursively repeating steps b2) to d2) until the at least one requested data connection is calculated/allocated, wherein the subsequent/neighbouring subnetwork controller of step c2) becomes a receiving subnetwork controller in a following step b2).

Again, just a comparably small piece of software is needed to deploy the method above because a part of the steps is recursively repeated. By the measures taken above, generally the chain of connected subnetworks providing the requesting connection may be obscured, thus keeping the (commercial) relations between the requesting entity and the subnetworks secret. If addresses of calculated/allocated subnetwork nodes of the path are encrypted, just the requesting entity can identify them. Other "foreign" subnetworks cannot gather information about the path in said networks. However, complete encryption is not mandatory. Some relations may be visible, if obscuring a particular relation is not useful to the requesting entity or if a subnetwork simply does not support such a function.

According to a further embodiment of the invention, addresses of calculated/allocated subnetwork nodes in the receiving subnetwork are encrypted by means of a public key of said requesting entity and decrypted by means of an associated private key of said requesting entity. Accordingly, by means of asymmetric ciphering, decryption can be done very easily as the subnetworks just have to gather (and store) the public key of said requesting entity. For example, the PGP (Pretty Good Privacy) encryption method may be used for the concerns above. However, instead of asymmetric ciphering, symmetric ciphering can be used as well.

In a beneficial embodiment of the invention, a "PcNotify" message of the "Path Computation Element Protocol", a "Resv" message of the " Resource Reservation Protocol", a "Label mapping" message of the "Label Distribution Protocol" or an "Update" message of the "Border Gateway Protocol" may be used for sending the addresses of the calculated/allocated subnetwork nodes in step d2). Accordingly, the invention may be implemented with just low effort as existing protocols are used respectively extended.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows an overview of an exemplary data network;
Figure 2 shows a table of data associated with the subnetworks;
Figure 3 shows a table of data associated with the subnetwork controllers;
Figure 4 shows an exemplary routing information sent by the requesting entity;
Figure 5 shows the data network of Fig. 1 in a first step of path allocation in the first subnetwork;
Figure 6 shows the data network of Fig. 1 in a second step of path allocation in the second subnetwork;
Figure 7 shows the data network of Fig. 1 in a third step of path allocation in the third subnetwork;
Figure 8 shows a first possibility of sending address information of the calculated/allocated path directly to the requesting entity;
Figure 9 shows a second possibility of sending address information of the calculated/allocated path back to a preceding subnetwork;
Figure 10 shows a second possibility of sending address information of the calculated/allocated path forward to a subsequent subnetwork;
Figure 11 shows how address information is sent from the third subnetwork to the requesting entity;
Figure 12 shows an exemplary address information sent to the requesting entity and
Figure 13 shows how a requesting entity can get two alternative paths for a requested connection.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

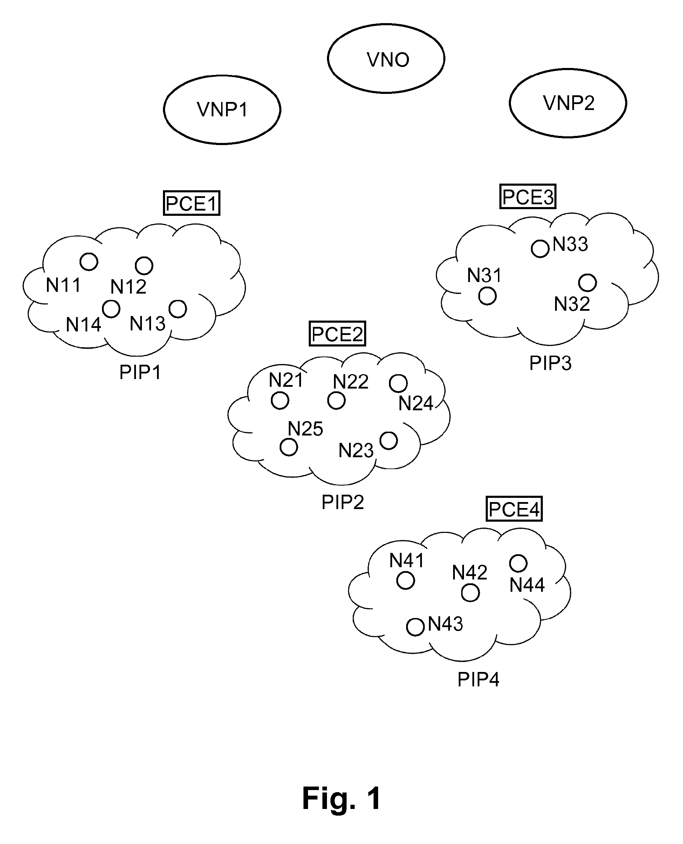

Figure 1 shows an exemplary arrangement with a network comprising connected subnetworks PIP1..PIP4 and a number of requesting entities VNP1, VNP2, VNO. Each subnetwork PIP1..PIP4 comprises a number of subnetwork nodes N11..N44 and a subnetwork controller PCE1..PCE4.

A requesting entity for example may be a "Virtual Network Provider" (VNP for short) or a "Virtual Network Operator" (VNO for short). A subnetwork may belong to a "Physical Infrastructure Provider" (PIP for short), and a subnetwork controller may be a "Path Computation Element" (PCE for short). However, these devices are just illustrative and presented for a better understanding of the invention.

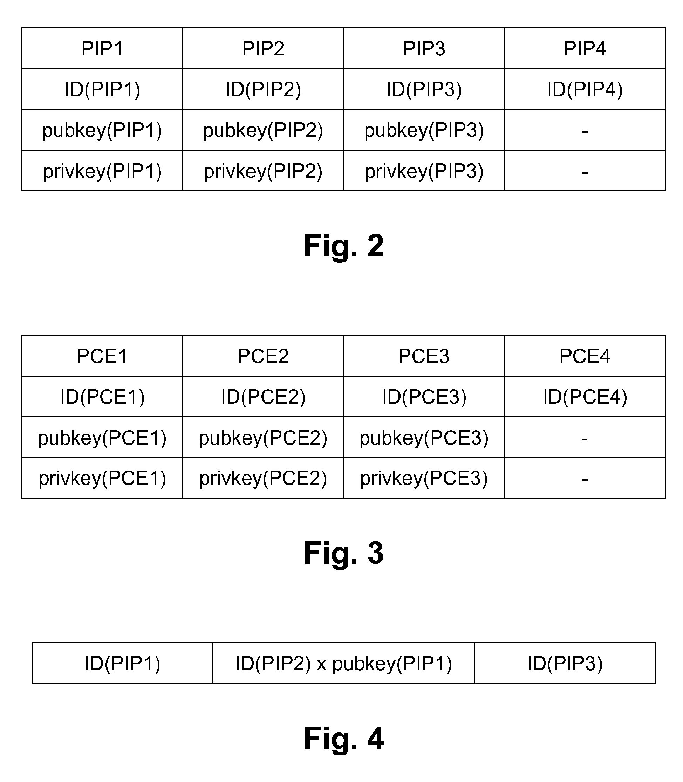

Fig. 2 shows an overview of parameters, which are used in the following example of establishing at least one data connection in said network. Each subnetwork PIP1..PIP4 has an subnetwork identifier ID(PIP1)..ID(PIP4) and each subnetwork PIP1..PIP3 has an associated private key privkey(PIP1)..privkey(PIP3) and an associated public key pubkey(PIP1)..pubkey(PIP3). However, as shown in Fig. 3 the identifiers and keys may be associated with the subnetwork controller PCE1..PCE4 alternatively or in addition.

Fig. 4 shows an exemplary routing information for establishing a data connection via subnetworks PIP1..PIP3. The identifiers ID(PIP1) and ID(PIP3) of subnetworks PIP1 and PIP3 are sent in plain format, the identifier ID(PIP2) of subnetwork PIP2 is encrypted by means of the public key pubkey(PIP1) of subnetwork PIP1. Encryption takes place in the requesting entity VNP1, VNP2, VNO.

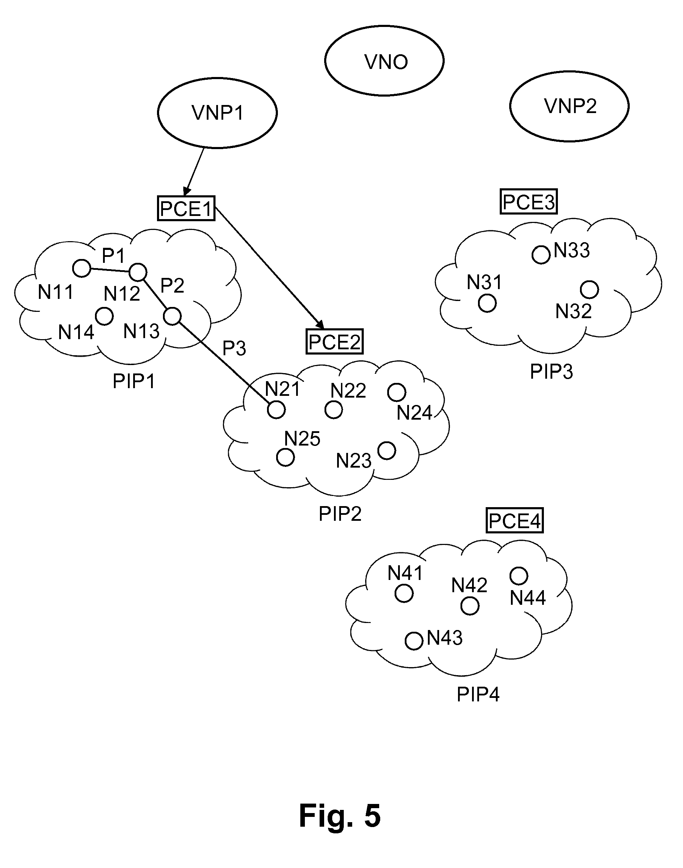

Fig. 5 to 7 show an exemplary method of establishing a data connection in the network of Fig. 1, wherein the requesting entity VNP1 requests a data connection via a plurality of paths through the connected subnetworks PIP1..PIP3. At least a part of the routing information, which identifies the subnetworks PIP1..PIP3, via which the at least one data connection shall be switched, is transmitted between the requesting entity VNP1 and the subnetworks PIP1..PIP3 in encrypted form (here ID(PIP2)). In other words, the requesting entity VNP1 sends routing information, which is at least partly encrypted.

Concretely, the method of establishing said data connection comprises the following steps:

In a first step a1) the requesting entity VNP1 sends routing information identifying the subnetworks PIP1..PIP3, via which the at least one data connection shall be switched, to a receiving subnetwork controller PCE1. In this example, the identifier ID(PIP2) of subnetwork PIP2 is encrypted as shown in Fig. 4. Concretely, the identifier ID(PIP2) is encrypted by means of the public key pubkey(PIP1) of subnetwork PIP1. It should also be noted that the identifier ID(PIP1) of subnetwork PIP1 may also be omitted in the routing information, as the receiving subnetwork controller PCE1 receives it directly from the requesting entity VNP1.

In a second step b1) the receiving subnetwork controller PCE1 calculates/allocates paths P1..P3 to the subsequent/neighbouring subnetwork PIP2 through the receiving subnetwork PIP1. For this reason the identifier ID(PIP2) of the subsequent/neighbouring subnetwork PIP2 is extracted from the routing information. As the identifier ID(PIP2) is encrypted, it is decrypted by means of the private key privkey(PIP1) associated with the receiving subnetwork PIP1. The receiving subnetwork controller PCE1 has information, which subnetwork node N21..N24 of the subsequent/neighbouring subnetwork PIP2 may be used for interfacing with the receiving subnetwork PIP1 or it can gather this information from the subsequent/neighbouring subnetwork controller PCE2.

In a third step c1) the receiving subnetwork controller PCE1 passes the routing information, in particular the remaining routing information, to the subsequent/neighbouring subnetwork controller PCE2.

The resulting state in the network is depicted in Fig. 5. As can be seen, paths P1..P3 are calculated/allocated and routing information has been passed to the subsequent/neighbouring subnetwork controller PCE2.

Next, steps b1) and c1) are recursively repeated, wherein the subsequent/neighbouring subnetwork controller PCE2 of step c1) becomes a receiving subnetwork controller PCE2 in a following step b1).

Accordingly, in a further step b1) the receiving subnetwork controller PCE2 calculates/allocates paths P4..P7 to the subsequent/neighbouring subnetwork PIP3 through the receiving subnetwork PIP2. For this reason the identifier ID(PIP3) of the subsequent/neighbouring subnetwork PIP3 is extracted from the routing information in plain format. The receiving subnetwork controller PCE2 has information, which subnetwork node N31..N33 of the subsequent/neighbouring subnetwork PIP3 may be used for interfacing with the receiving subnetwork PIP2 or it can gather this information from the subsequent/neighbouring subnetwork controller PCE3.

In a further step c1) the receiving subnetwork controller PCE2 passes the routing information, in particular the remaining routing information, to the subsequent/neighbouring subnetwork controller PCE3.

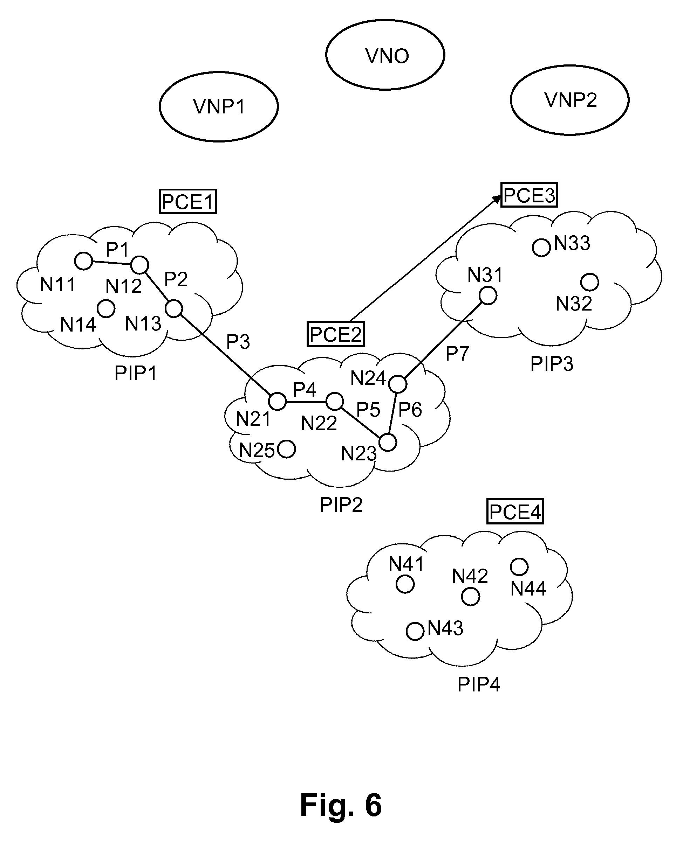

The resulting state in the network is depicted in Fig. 6. As can be seen, paths P1..P7 are calculated/allocated and routing information has been passed to the subsequent/neighbouring subnetwork controller PCE3.

Next, steps b1) and c1) are recursively repeated once again, wherein the subsequent/neighbouring subnetwork controller PCE3 of step c1) becomes a receiving subnetwork controller PCE3 in a following step b1).

In a further step b1) the receiving subnetwork controller PCE3 calculates/allocates paths P8..P9 to a further subsequent/neighbouring subnetwork, which is not shown in the Figs. For this reason the identifier of the subsequent/neighbouring subnetwork is extracted from the routing information and decrypted as the case may be.

In a further step c1) the receiving subnetwork controller PCE3 passes the routing information, in particular the remaining routing information, to a subsequent/neighbouring subnetwork controller.

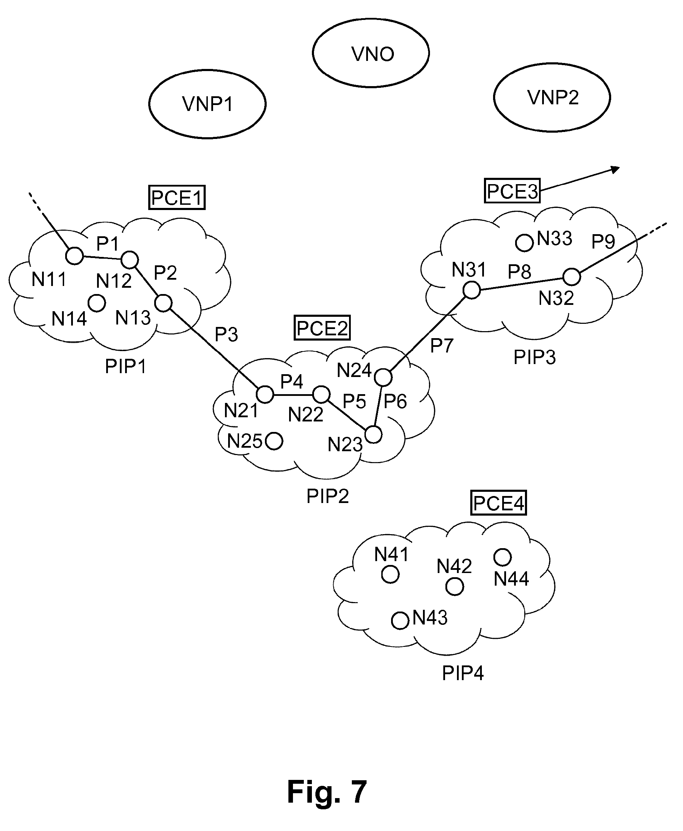

The resulting state in the network is depicted in Fig. 7. As can be seen, paths P1..P9 are calculated/allocated and routing information has been passed to a subsequent/neighbouring subnetwork controller. Steps b1) and c1) are recursively repeated in the way above until the at least one requested data connection is calculated/allocated. Fig. 7 also shows a path preceding path P1, thus indicating that the same procedure may also take place in an opposite direction. Even branches are imaginable, if in a step c1) an according routing information is passed to more than one subsequent/neighbouring subnetwork controller PCE1..PCE4.

By the measures taken above, the chain of connected subnetworks PIP1..PIP3 providing the requesting connection is obscured, thus keeping the (commercial) relations between the requesting entity VNP1 and the subnetworks PIP1..PIP3 secret.

In this particular example, just the identifier ID(PIP2) of subnetwork PIP2 is kept secret, implying that the relation between requesting entity VNP1 and subnetwork PIP2 is secret. Just the next neighbour is known to a subnetwork controller PCE1..PCE3. In this particular example, just subnetwork controller PCE1 "knows" that the subnetwork PIP2 is part of the chain. Some relations may be visible, if obscuring a particular relation is not useful to the requesting entity VNP1 (which is the case for subnetworks PIP1 and PIP3 in this example) or if a subnetwork simply does not support such a function (which is the case for subnetwork PIP4).

To avoid undermining of the obscuring feature, advantageously every pair of a private key privkey(PIP1)..privkey(PIP3) and a public key pubkey(PIP1)..pubkey(PIP3) is different. However, using pairs of private keys privkey(PIP1)..privkey(PIP3) and public keys pubkey(PIP1)..pubkey(PIP3) is not the only possibility for encryption/decryption. Other encrypting/decrypting schemes are applicable as well, for example symmetric ciphering.

Next, some protocols are indicated, which may be used for communication between the requesting entity VNP1, VNP2, VNO and the subnetworks PIP1..PIP4. For example the "Path Computation Element Protocol", the "Resource Reservation Protocol", the "Label Distribution Protocol" and/or the "Border Gateway Protocol" may be used for this reason. In particular, a "PcRequest" message of the "Path Computation Element Protocol", a "Path" message of the "Resource Reservation Protocol", a "Label request" message of the "Label Distribution Protocol" or a "Update" message of the "Border Gateway Protocol" can be used for sending the routing information in step a1).

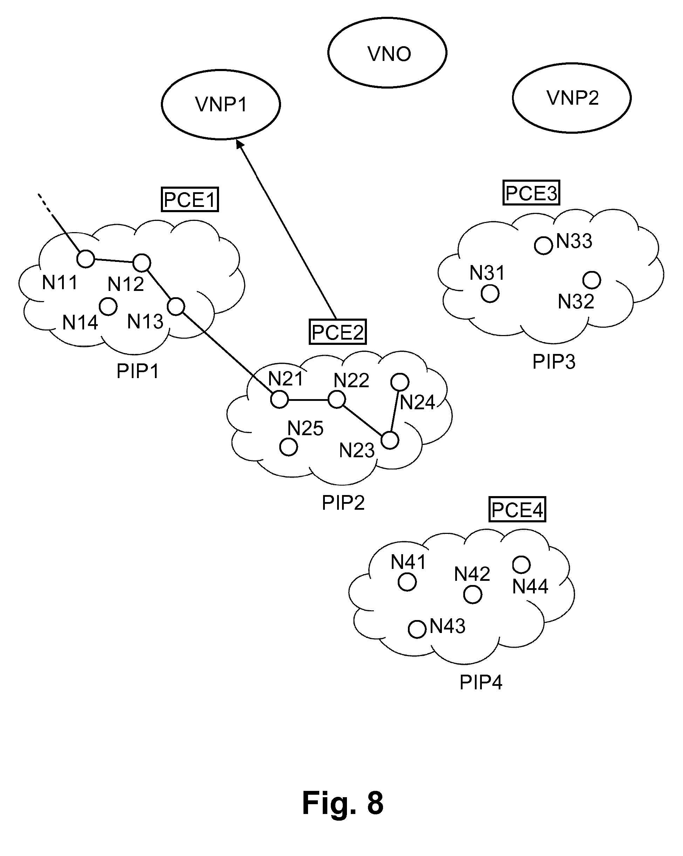

Figs. 8 to 12 now illustrate a method of establishing at least one data connection in a network, wherein a requesting entity VNP1, VNP2, VNO requests the at least one data connection via a plurality of paths P1..P9 through connected subnetworks PIP1..PIP4 in said network, wherein at least some addresses ID(N11)..ID(N44) of calculated/allocated subnetwork nodes N11..N44 of the at least one data connection are transmitted between the requesting entity VNP1, VNP2, VNO and the subnetworks PIP1..PIP4 in encrypted form. In other words, addresses ID(N11)..ID(N44) of calculated/allocated subnetwork nodes N11..N44 of at least some of the paths P1..P9 are sent from a subnetwork PIP1..PIP4 to the requesting entity VNP1, VNP2, VNO via at least a part of the paths P1..P9 in encrypted form. Some of the addresses ID(N11)..ID(N44) can be sent from a subnetwork PIP1..PIP4 directly to the requesting entity VNP1, VNP2, VNO in plain form. Some of the addresses ID(N11)..ID(N44) may also be sent from a subnetwork PIP1..PIP4 directly to the requesting entity VNP1, VNP2, VNO in encrypted form.

Concretely, the method of establishing said data connection comprises the following steps:

In a first step a2), which is quite similar to step a1), the requesting entity VNP1 sends routing information identifying the subnetworks PIP1..PIP3, via which the at least one data connection shall be switched, to a receiving subnetwork controller PCE1.

In a second step b2), which is similar to step b1), the receiving subnetwork controller PCE1 calculates/allocates subnetwork nodes N11..N13 and paths P1..P3 via said nodes N11..N13 to a subsequent/neighbouring subnetwork PIP2 through the receiving subnetwork PIP1.

In a third step c2), which is quite similar to step c2), the receiving subnetwork controller PCE1 passes the routing information, in particular the remaining routing information, to the subsequent/neighbouring subnetwork controller PCE2.

In this example, in a fourth step d2) the receiving subnetwork controller PCE1 sends addresses ID(N11)..ID(N13) of calculated/allocated subnetwork nodes N11..N13 of the path P1..P3 in the receiving subnetwork PIP1 in encrypted form to a subsequent/neighbouring subnetwork controller PCE2. However, said addresses ID(N11)..ID(N13) may also be sent directly to the requesting entity VNP1 in plain or encrypted form or may be stored for later use. For example the subnetwork controller PCE1 may store the addresses ID(N11)..ID(N13) and send them to the requesting entity VNP1 when the subnetwork controller PCE1 receives a notification from the last subnetwork controller in the chain that the data connection is established.

Next, steps b2) to d2) are recursively repeated, wherein the subsequent/neighbouring subnetwork controller PCE2 of step c2) becomes a receiving subnetwork controller PCE2 in a following step b2).

In a further step b2) the receiving subnetwork controller PCE2 calculates/allocates subnetwork nodes N21..N24 and paths P4..P7 via said nodes N21..N24 to the subsequent/neighbouring subnetwork PIP3 through the receiving subnetwork PIP2.

In a further step c2) the receiving subnetwork controller PCE2 passes the routing information, in particular the remaining routing information, to the subsequent/neighbouring subnetwork controller PCE3.

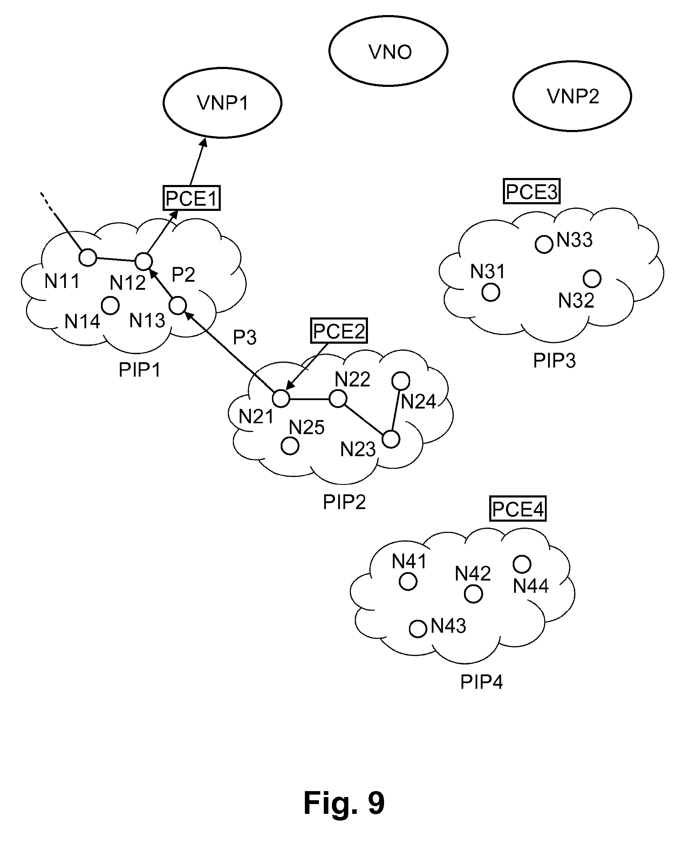

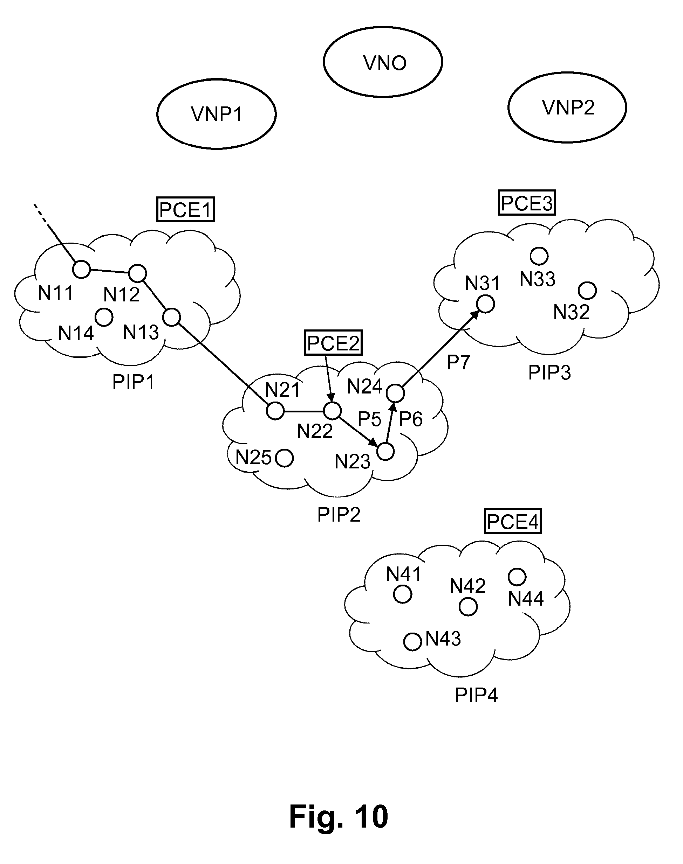

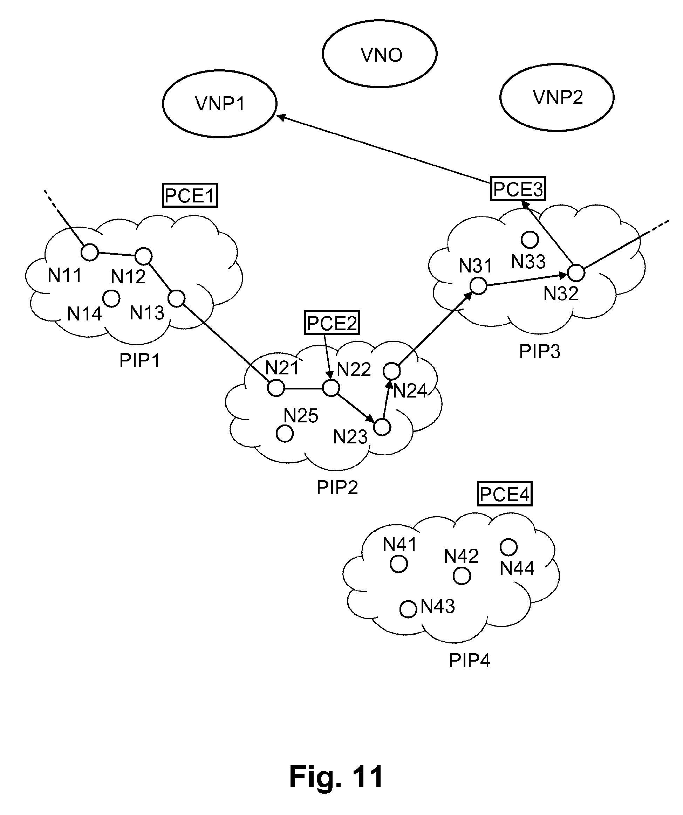

In a further step d2) the receiving subnetwork controller PCE2 transmits addresses ID(N21)..ID(N24) of calculated/allocated subnetwork nodes N21..N24 of the path P4..P7, wherein a number of variants are possible:
- ) First, said addresses ID(N21)..ID(N24) can be sent directly to the requesting entity VNP1 in plain or encrypted form. This possibility is shown in Fig. 8.
- ) Second, said addresses ID(N21)..ID(N24) can be sent to the requesting entity VNP1 via at least a part of the preceding path P1..P3 in encrypted form. This possibility is depicted in Fig. 9, showing that said addresses ID(N21)..ID(N24) are sent via nodes N21, N13 and N12 to the subnetwork controller PCE1 and from there to the requesting entity VNP1.
- ) Third, said addresses ID(N21)..ID(N24) can be sent to a subsequent/neighbouring subnetwork controller PCE3 in encrypted form. This possibility is depicted in Fig. 10, showing that said addresses ID(N21)..ID(N24) are sent via nodes N22, N23 and N24 to node N31. The further course of action is not yet decided at this moment, so the arrow ends at node N31. However, Fig. 11 shows, that said addresses ID(N21)..ID(N24) are sent to the requesting entity VNP1 by the subnetwork controller PCE3 in a further step.

In any case, addresses ID(N11)..ID(N33) of calculated/allocated subnetwork nodes N22..N33 in a subnetwork PIP1..PIP3 may be encrypted by means of a public key pubkey(VNP1) of said requesting entity VNP1 and decrypted by means of associated private key privkey(VNP1) of said requesting entity VNP1. The public key pubkey(VNP1) of the requesting entity VNP1 may be sent to the subnetworks PIP1..PIP3 along with the request for the data connection for example.

It should also be noted that first to third possibilities also refer to the addresses ID(N11)..ID(N13) of subnetwork nodes N11..N13 calculated/allocated in subnetwork PIP1. As disclosed above, in this example said addresses ID(N11)..ID(N13) have been sent to the subnetwork controller PCE2 in the preceding step d2).

Generally, transaction identifications may be used to link an answer to a request. For example, the requesting entity VNP1 can supplement the request for a data connection with a transaction identification, which is particularly useful, if the requesting entity VNP1 issues a lot of requests before an answer from a subnetwork PIP1..PIP3 / subnetwork controller PCE1..PCE3 is received. In this way, the requesting entity VNP1 can associate a received answer with a request.

If the subnetworks PIP1..PIP3 / subnetwork controllers PCE1..PCE3 send their addresses ID(N11)..ID(N33) back to the first subnetwork PIP1 / subnetwork controller PCE1, local transaction identifications may be used to link request and answer of adjacent communication partners. If the subnetworks PIP1..PIP3 / subnetwork controllers PCE1..PCE3 do not send their addresses ID(N11)..ID(N33) back to the first subnetwork PIP1 / subnetwork controller PCE1, then it is beneficial to use a global transaction identification.

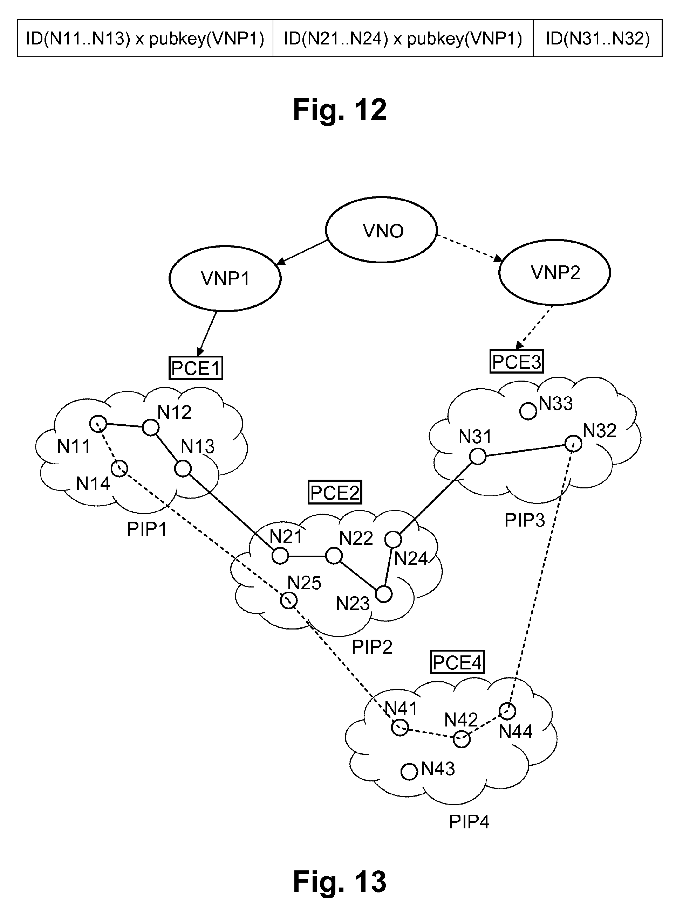

Fig. 12 now shows an exemplary message sent to the requesting entity VNP1 by the subnetwork controller PCE3. In this example, addresses ID(N11)..ID(N13) and ID(N21)..ID(N24) are encrypted by means of the public key pubkey(VNP1) of the requesting entity VNP1. The addresses ID(N31)..ID(N32) are sent to the requesting entity VNP1 in plain format as this information does not travel through other subnetworks PIP1, PIP2. However, addresses ID(N31)..ID(N32) may also be encrypted as the case may be.

By the measures taken above, addresses ID(N11)..ID(N24) of calculated/allocated subnetwork nodes N11..N24 and thus the chain of connected subnetworks PIP1..PIP3 providing the requesting connection is obscured. In this way the (commercial) relations between the requesting entity VNP1 and the subnetworks PIP1..PIP3 are kept secret.

Just the requesting entity VNP1 can decrypt the addresses ID(N11)..ID(N24) and "knows" which subnetwork nodes N11..N24 are part of the requested connection. Some relations may be visible, if obscuring a particular relation is not useful to the requesting entity VNP1 (for example the addresses ID(N21)..ID(N24) may also be sent via other subnetworks PIP1, PIP3 in plain format) or if a subnetwork simply does not support such a function (which is the case for subnetwork PIP4).

Using a pair of a private key privkey(VNP1) and a public key pubkey(VNP1) is not the only possibility for encryption/decryption. Other encrypting/decrypting schemes are applicable as well, for example symmetric ciphering.

Again the "Path Computation Element Protocol", the "Resource Reservation Protocol", the "Label Distribution Protocol" and/or the "Border Gateway Protocol" may be used for communication between the requesting entity VNP1, VNP2, VNO and the subnetworks PIP1..PIP4. In particular, a "PcNotify" message of the "Path Computation Element Protocol", a "Resv" message of the "Resource Reservation Protocol", a "Label mapping" message of the "Label Distribution Protocol" or an "Update" message of the "Border Gateway Protocol" is used for sending the addresses ID(N11)..ID(N32) of the calculated/allocated subnetwork nodes N21..N32 in step d2). As apparent, the "Update" message of the "Border Gateway Protocol" can be used for both the forward and backward direction (i.e. for sending routing information and for sending the address information).

Finally, steps b2) to d2) are recursively repeated in the way above until the at least one requested data connection is calculated/allocated.

Fig. 13 finally discloses an example, wherein a virtual network operator VNO requests a connection through the network from a first virtual network provider VNP1 and a second virtual network provider VNP2. The virtual network operator VNO basically does not care about how said connection is routed but it just demands for the cheapest connection and/or a particular quality of service for example.

The first virtual network provider VNP1 and the second virtual network provider VNP2 have different (commercial) relations in the network and so the first virtual network provider VNP1 offers a connection between nodes N11 and N32 via nodes N12, N13, N21, N22, N23, N24 and N31 (solid line), whereas the second virtual network provider VNP2 offers a connection between nodes N11 and N32 via nodes N14, N25, N41, N42 and N44 (dotted line). Accordingly, virtual network operator VNO may chose the "best" connection.

In this example, still the virtual network provider VNP1 and VNP2 are seen as the requesting entity sending and/or receiving encrypted routing information respectively address information. However, also the virtual network operator VNO may have the role of the requesting entity sending and/or receiving encrypted routing information respectively address information. In this case the virtual network provider VNP1 and VNP2 can be seen as middlemen more or less transparently transmitting information exchanged between the virtual network operator VNO and the subnetworks PIP1..PIP4 respectively their subnetwork controllers PCE1..PCE4.

It should be noted that the procedures depicted in Figs. 4 to 7 and in Figs. 8 to 12 generally can be deployed alone or in combination. Although a combination of both is useful, the procedure depicted in Figs. 4 to 7 can also be used without sending addresses ID(N11)..ID(N32) of calculated/allocated subnetwork nodes N11..N32 back to the requesting entity VNP1 in encrypted form. Equivalently, the procedure depicted in Figs. 8 to 12 can also be used without sending routing information from the requesting entity VNP1 to the subnetworks PIP1..PIP3 in encrypted form.

It should also be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state that the relation between a requesting entity VNP1, VNP2, VNO and subnetworks PIP1..PIP4 is obscured by generally encrypting "routing information" about the connection requested by the requesting entity VNP1, VNP2, VNO. Particularly this refers to routing information, which is sent by the requesting entity VNP1, VNP2, VNO and identifies the subnetworks PIP1..PIP4 and/or to the addresses ID(N11)..ID(N44) of calculated/allocated subnetwork nodes N11..N44 sent by the subnetworks PIP1..PIP4.

### List of reference signs:

- VNO: virtual network operator
- VNP1, VNP2: requesting entity / virtual network provider
- PIP1..PIP4: subnetwork / physical infrastructure provider
- PCE1..PCE4: subnetwork controller / path computation element
- N11..N44: network nodes
- P1..P4: path
- privkey(PIPx): private key of subnetwork
- pubkey(PIPx): public key of subnetwork
- privkey(VNPx, VNO): private key of requesting entity
- pubkey(VNPx, VNO): public key of requesting entity
- ID(PIPx): identifier of subnetwork

## Claims

1. Method of establishing at least one data connection in a network, wherein a requesting entity (VNP1, VNP2, VNO) requests the at least one data connection via a plurality of paths (P1..P9) through connected subnetworks (PIP1..PIP4) in said network,
wherein
at least a part of the routing information, which identifies the subnetworks (PIP1..PIP4), via which the at least one data connection shall be switched, and/or at least some addresses (ID(N11)..ID(N44)) of calculated/allocated subnetwork nodes (N11..N44) of the at least one data connection are transmitted between the requesting entity (VNP1, VNP2, VNO) and the subnetworks (PIP1..PIP4) in encrypted form.

2. Method of establishing at least one data connection in a network as set forth in claim 1, wherein the requesting entity (VNP1, VNP2, VNO) requests the at least one data connection via the plurality of paths (P1..P9) through connected subnetworks (PIP1..PIP4) in said network, and wherein
the requesting entity (VNP1, VNP2, VNO) sends routing information, which identifies the subnetworks (PIP1..PIP4), via which the at least one data connection shall be switched, and wherein the routing information is at least partly encrypted.

3. Method of establishing at least one data connection in a network as set forth in claim 1 or 2, wherein the requesting entity (VNP1, VNP2, VNO) requests the at least one data connection via the plurality of paths (P1..P9) through connected subnetworks (PIP1..PIP4) in said network, comprising the steps of
a1) the requesting entity (VNP1) sending routing information identifying the subnetworks (PIP1..PIP3), via which the at least one data connection shall be switched, to a receiving subnetwork controller (PCE1), wherein identifiers (ID(PIP1)..ID(PIP3)) of at least some subnetworks (PIP1..PIP3) are encrypted,
b1) the receiving subnetwork controller (PCE1) allocating a path (P1..P3) to a subsequent/neighbouring subnetwork (PIP2) through the receiving subnetwork (PIP1), wherein an identifier (ID(PIP2)) of the subsequent/neighbouring subnetwork (PIP2) is extracted from the routing information in plain format or extracted in encrypted form and decrypted by means of a key (privkey(PIP1)) associated with the receiving subnetwork (PIP1),
c1) the receiving subnetwork controller (PCE1) passing the routing information, in particular the remaining routing information, to a subsequent/neighbouring subnetwork controller (PCE2),
d1) recursively repeating steps b1) and c1) until the at least one requested data connection is calculated/allocated, wherein the subsequent/neighbouring subnetwork controller (PCE2) of step c1) becomes a receiving subnetwork controller (PCE2) in a following step b1).

4. Method as set forth in any one of the preceding claims, wherein an identifier (ID(PIP2)) of a subsequent/neighbouring subnetwork (PIP2) is encrypted by means of public key (pubkey(PIP1)) of the receiving subnetwork (PIP1) and decrypted by means of an associated private key (privkey(PIP1)) of said receiving subnetwork (PIP1).

5. Method as set forth in claim 4, wherein every pair of a private key (privkey(PIP1)..privkey(PIP3)) and a public key (pubkey(PIP1)..pubkey(PIP3)) is different.

6. Method as set forth in any one of the preceding claims, wherein at least one of the "Path Computation Element Protocol", the "Resource Reservation Protocol", the "Label Distribution Protocol" and the "Border Gateway Protocol" is used for communication between the requesting entity (VNP1, VNP2, VNO) and the subnetworks (PIP1..PIP4).

7. Method as set forth in claim 6, wherein a "PcRequest" message of the "Path Computation Element Protocol", a "Path" message of the "Resource Reservation Protocol", a "Label request" message of the "Label Distribution Protocol" or an "Update" message of the "Border Gateway Protocol" is used for sending the routing information in step a1).

8. Method of establishing at least one data connection in a network as set forth in any one of the preceding claims, wherein the requesting entity (VNP1, VNP2, VNO) requests the at least one data connection via a plurality of paths (P1..P9) through connected subnetworks (PIP1..PIP4) in said network,
wherein
addresses (ID(N11)..ID(N44)) of calculated/allocated subnetwork nodes (N11..N44) of at least some of the paths (P1..P9) are sent from a subnetwork (PIP1..PIP4) to the requesting entity (VNP1, VNP2, VNO) via at least a part of the paths (P1..P9) in encrypted form.

9. Method as set forth in claim 8, wherein some of the addresses (ID(N11)..ID(N44)) are sent from a subnetwork (PIP1..PIP4) directly to the requesting entity (VNP1, VNP2, VNO) in plain form.

10. Method as set forth in claim 8 or 9, wherein some of the addresses (ID(N11)..ID(N44)) are sent from a subnetwork (PIP1..PIP4) directly to the requesting entity (VNP1, VNP2, VNO) in encrypted form.

11. Method of establishing at least one data connection in a network as set forth in any one of the claims 8 to 10, wherein the requesting entity (VNP1, VNP2, VNO) requests the at least one data connection via a plurality of paths (P1..P9) through connected subnetworks (PIP1..PIP4) in said network, comprising the steps of
a2) the requesting entity (VNP1) sending routing information identifying the subnetworks (PIP1..PIP3), via which the at least one data connection shall be switched, to a receiving subnetwork controller (PCE1),
b2) the receiving subnetwork controller (PCE2) allocating subnetwork nodes (N21..N24) and paths (P4..P7) via said nodes (N21..N24) to a subsequent/neighbouring subnetwork (PIP3) through the receiving subnetwork (PIP2),
c2) the receiving subnetwork controller (PCE2) passing the routing information, in particular the remaining routing information, to a subsequent/neighbouring subnetwork controller (PCE3),
d2) the receiving subnetwork controller (PCE2) sending addresses (ID(N21)..ID(N24)) of calculated/allocated subnetwork nodes (N21..N24) of the path (P4..P7) in the receiving subnetwork (PIP2) and if applicable addresses (ID(N11)..ID(N13), ID(N31)..ID(N32)) of calculated/allocated subnetwork nodes (N11..N13, N31..N32) of a further path (P1..P3, P8..P9) in a further subnetwork (PIP1, PIP3) of the at least one data connection
- in plain or encrypted form directly to the requesting entity (VNP1),
- in encrypted form to the requesting entity (VNP1) via at least a part of the preceding path (P1..P3) and/or
- in encrypted form to a subsequent/neighbouring subnetwork controller (PCE3),
e2) recursively repeating steps b2) to d2) until the at least one requested data connection is calculated/allocated, wherein the subsequent/neighbouring subnetwork controller (PCE3) of step c2) becomes a receiving subnetwork controller (PCE3) in a following step b2).

12. Method as set forth in any one of the claims 8 to 11, wherein addresses (ID(N11)..ID(N44)) of calculated/allocated subnetwork nodes (N21..N24) in the receiving subnetwork (PIP2) are encrypted by means of a public key (pubkey(VNP1, VNP2, VNO)) of said requesting entity (VNP1, VNP2, VNO) and decrypted by means of an associated private key (privkey(VNP1, VNP2, VNO)) of said requesting entity (VNP1, VNP2, VNO).

13. Method as set forth in claim 6 and any one of the claims 8 to 12, wherein a "PcNotify" message of the "Path Computation Element Protocol", a "Resv" message of the "Resource Reservation Protocol", a "Label mapping" message of the "Label Distribution Protocol" or an "Update" message of the "Border Gateway Protocol" is used for sending the addresses (ID(N11)..ID(N44)) of the calculated/allocated subnetwork nodes (N21..N24) in step d2).

14. Requesting entity (VNP1, VNP2, VNO), comprising
- means for encrypting routing information, which identifies the subnetworks (PIP1..PIP4), via which at least one data connection shall be switched, and/or
- means for decrypting at least some addresses (ID(N11)..ID(N44)) of calculated/allocated subnetwork nodes (N11..N44) of the at least one data connection.

15. Subnetwork (PIP1..PIP4) / subnetwork controller (PCE1..PCE4) comprising
- means for decrypting routing information, which identifies the subnetworks (PIP1..PIP4), via which at least one data connection shall be switched, and/or
- means for encrypting at least some addresses (ID(N11)..ID(N44)) of calculated/allocated subnetwork nodes (N11..N44) of the at least one data connection.
